# EUROPÄISCHE PATENTSCHRIFT

(11) **EP 1 519 098 B1**
(45) Veröffentlichungstag und Bekanntmachung des Hinweises auf die Patenterteilung: **06.09.2006**
(21) Anmeldenummer: 04017169.6
(22) Anmeldetag: 21.07.2004
(51) Int. Cl.: F16L 53/00, F16L 11/12, F16L 11/127

(54) **Elektrisch beheizbare Flüssigkeitsleitung**
Electrically heatable fluid-conveying hose
Conduit de transport de fluide à chauffage électrique

(30) Priorität: 24.09.2003 DE 10344137
(43) Veröffentlichungstag der Anmeldung: 30.03.2005
(73) Patentinhaber: Rasmussen GmbH, 63477 Maintal (DE)
(72) Erfinder: Auber, Heiko, 78664 Eschbronn-Mariazell (DE)
(74) Vertreter: Knoblauch, Andreas

(56) Entgegenhaltungen:
- EP-A- 1 125 810
- EP-A- 1 329 660
- DE-A- 1 675 407
- DE-A- 2 813 824
- DE-A- 19 728 942
- DE-U- 8 713 072

## Beschreibung

Gemäß dem Oberbegriff der Anspruchs 1 betrifft die Erfindung eine aus der DE-U-87 13072 bekannte elektrisch beheizbare Flüssigkeitsleitung, bei der unmittelbar auf einer inneren Kunststoffschicht ein Heizdraht angeordnet und unmittelbar um die Kunststoffschicht und den Heizdraht ein elektrisch isolierendes Band wendelförmig herumgewickelt ist.

Das bevorzugte Anwendungsgebiet der Flüssigkeitsleitung sind Harnstoffe, z.B. sogenanntes "AdBlue", die zur Abgasnachbehandlung dieselbetriebener Fahrzeuge in die Abgasleitung eingespritzt werden, um giftige NOₓ-Bestandteile zu normalen Bestandteilen der Luft, d.h. Stickstoff, Wasser und Kohlendioxid, zu reduzieren. Sie ist aber auch für Dieselkraftstoffe, Wasser, wie Kühl- oder Waschwasser, oder Bremsöl in Kraftfahrzeugen geeignet. Durch die Beheizung kann ein Einfrieren der Harnstoffe, Dieselkraftstoffe oder des Wassers verhindert und/oder eine Vorwärmung von Dieselkraftstoffen erreicht werden. Die Anwendung für Bremsöl verhindert eine zu hohe Viskosität des Bremsöls bei tieferen Temperaturen und damit eine Verlangsamung des Bremseingriffs.

Bei einer bekannten, im Handel erhältlichen Flüssigkeitsleitung bestehen die Kunststoffschicht und das Band aus Kautschuk, und das Band wird an der Kautschukschicht anvulkanisiert, nachdem noch ein Verstärkungsgewebe zwischen beiden angeordnet wurde, um eine Aufweitung der Flüssigkeitsleitung bei hohen Drücken zu vermeiden.

Das Anvulkanisieren ist zeit- und energieaufwendig und demzufolge kostspielig.

Aus der DE-A-2 813 824 ist es bekannt, zwei parallellaufende oder miteinander verseilte Rohre aus Metall oder Kunststoff zur Wärmedämmung mit einer mehrlagigen Vliesstoffbewicklung aus Glasseide oder Glasfasern zu versehen. Unterhalb der Vliesstoffbewicklung kann ein Heizband oder eine Heizdrahtbewicklung vorgesehen sein. Zumindest eine oberste Lage der Vliesstoffbewicklung ist verklebt oder verschweißt. Parallele oder verseilte Rohre durch ein Heizband oder einen Heizdraht zu beheizen, ist nicht effektiv, weil sich der Heizdraht oder das Heizband nicht ringsum an das eine oder andere Rohr anlegt. Eine mehrlagige Wärmedämmbewicklung ist aufwendig herzustellen, desgleichen deren Verklebung oder Verschweißung.

Aus der DE-A-1 675 407 ist ein Rohr aus Kunststoff bekannt, das mit einem elektrisch leitenden, isolierten Draht umwickelt ist. Der Draht ist mittels Klebstoff an dem Rohr festgeklebt und dient zur Ortung des im Erdboden verlegten Rohres. Die Ortung geschieht beispielsweise dadurch, daß ein elektrischer Strom durch den Draht geleitet und die Lage des Magnetfelds mit einem Magnetfelddetektor festgestellt wird. Ein solcher elektrisch leitender Draht ist jedoch kein Heizdraht. Im Gegensatz zu einem Heizdraht, der einen relativ hohen ohmschen Widerstand aufweist, ist die Erzeugung von Wärme durch einen elektrisch leitenden Draht gerade nicht erwünscht, weshalb er eine möglichst hohe elektrische Leitfähigkeit hat.

Der Erfindung liegt die Aufgabe zugrunde, eine Flüssigkeitsleitung der eingangs genannten Art anzugeben, die einfacher herstellbar ist.

Erfindungsgemäß ist diese Aufgabe bei der eingangs erwähnten Flüssigkeitsleitung dadurch gelöst, daß das isolierende Band ein Klebeband ist, das einen einseitig mit Klebstoff beschichteten Textilstreifen aufweist, dessen Klebstoff mit der Kunststoffschicht verklebt ist.

Bei dieser Lösung kann die Kunststoffschicht auf einfache Weise, z.B. mittels eines Wickelautomaten oder sogar von Hand, gegebenenfalls mittels einer einfachen Wickelvorrichtung, mit dem Klebeband umwickelt werden. Ein Klebeband mit einem Textilstreifen hat eine hohe Zugfestigkeit und kann daher sehr fest aufgewickelt werden. Darüber hinaus ist seine nach dem Aufwickeln außen liegende Seite nicht klebfähig.

Der Heizdraht kann wendelförmig um die Kunststoffschicht herumgewickelt sein. Wegen der sich dadurch ergebenden räumlichen Konzentration ist die Heizleistung pro Fläche relativ hoch, so daß die Flüssigkeit auch bei relativ geringer Heizleistung rasch erwärmt wird. Diese hohe Heizleistung pro Fläche kann auch dadurch erreicht werden, daß der Heizdraht in Form einer Doppelwendel um die Kunststoffschicht herumgewickelt ist und einen elektrisch isolierenden Überzug aufweist. Die benachbarten Drahtabschnitte können daher relativ dicht nebeneinander verlaufen, ohne daß ein Kurzschluß entsteht.

Vorzugsweise bildet der Heizdraht eine Schlaufe. Die Schlaufe ermöglicht eine einfache Bewicklung der Kunststoffschicht mittels des Heizdrahtes, da die Hin- und Rückleitung gleichzeitig gewickelt werden kann.

Vorzugsweise sind die Enden des Heizdrahtes mit einem Stecker verbunden. Der Heizdraht kann daher auf einfache Weise mit einer Spannungsquelle verbunden werden.

Die Erfindung und ihre Weiterbildungen werden nachstehend anhand der beiliegenden Zeichnungen bevorzugter Ausführungsbeispiele näher beschrieben. Darin stellen dar:
- Fig. 1: eine Seitenansicht eines ersten Ausführungsbeispiels einer erfindungsgemäßen elektrisch beheizbaren Flüssigkeitsleitung,
- Fig. 2: eine Seitenansicht der Flüssigkeitsleitung nach Fig. 1 ohne das gemäß Fig. 1 außen herumgewickelte Klebeband,
- Fig. 3: eine Seitenansicht eines zweiten Ausführungsbeispiels einer erfindungsgemäßen Flüssigkeitsleitung, bei dem zur Verdeutlichung ebenfalls das erfindungsgemäß vorgesehene Klebeband weggelassen ist.

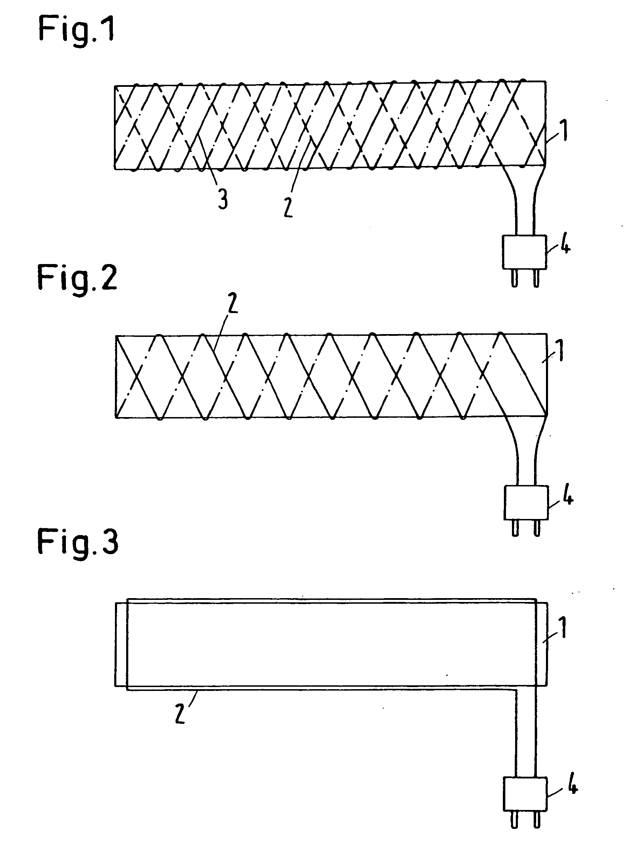

Die in den Fig. 1 bis 3 dargestellten Flüssigkeitsleitungen haben innen eine rohr- oder schlauchartige, biegsame Kunststoffschicht 1, auf der ein Heizdraht 2 in Form eines Widerstandsdrahtes angeordnet ist. Bei beiden Ausführungsbeispielen ist um die Kunststoffschicht 1 und den Heizdraht 2 ein elektrisch isolierendes Band 3 wendelförmig herumgewickelt. In den Fig. 2 und 3 ist das Band 3 nicht dargestellt, um den Verlauf des Heizdrahtes 2 besser erkennen zu können.

Das isolierende Band 3 ist ein Klebeband, dessen Klebstoff mit der Kunststoffschicht 1 verklebbar ist. Das Band 3 weist einen einseitig mit Klebstoff beschichteten Textilstreifen auf, der dem Band eine hohe Reißfestigkeit verleiht.

Bei dem Ausführungsbeispiel nach den Fig. 1 und 2 bildet der Heizdraht eine Schlaufe, die wendelförmig als Doppelwendel um die Kunststoffschicht 1 herumgewickelt ist.

Auch bei dem Ausführungsbeispiel nach Fig. 3 bildet der Heizdraht 2 eine Schlaufe, deren Hin- und Rückleitungen jedoch aufeinander abgekehrten Seiten der Kunststoffschicht 1 geradlinig verlaufen.

Der Heizdraht 2 ist mit einem elektrisch isolierenden Überzug aus Kunststoff versehen, so daß die Hin- und Rückleitungen bei dem Ausführungsbeispiel nach den Fig. 1 und 2 eng beieinander verlaufen können, aber ein Kurzschluß vermieden wird.

Der wendelförmige Verlauf und die enge Nachbarschaft der Heizdrahtabschnitte erhöht die Wärmeleistung pro Flächeneinheit der Kunststoffschicht 1, so daß die durch die Flüssigkeitsleitung strömende Flüssigkeit rasch erwärmt werden kann.

Die Enden des Heizdrahtes 2 sind mit einem Stecker 4 verbunden, der seinerseits mit einer Steckdose einer Spannungsquelle zusammengesteckt werden kann.

Die Ausbildung des isolierenden Bandes 3 als Klebeband vereinfacht die Herstellung der Flüssigkeitsleitung im Vergleich zu einer bekannten Flüssigkeitsleitung, bei der das isolierende Band an der Kunststoffschicht 1 anvulkanisiert ist. Das Umwickeln der Kunststoffschicht 1 mit dem Klebeband ist sehr einfach und rasch durchführbar. Eine anschließende Vulkanisierung entfällt.

## Patentansprüche

1. Elektrisch beheizbare Flüssigkeitsleitung, bei der unmittelbar auf einer inneren Kunststoffschicht (1) ein Heizdraht (2) angeordnet und unmittelbar um die Kunststoffschicht (1) und den Heizdraht (2) ein elektrisch isolierendes Band (3) wendelförmig herumgewickelt ist, **dadurch gekennzeichnet, daß** das isolierende Band (3) ein Klebeband ist, das einen einseitig mit Klebstoff beschichteten Textilstreifen aufweist, dessen Klebstoff mit der Kunststoffschicht (1) verklebt ist.

2. Flüssigkeitsleitung nach Anspruch 1, **dadurch gekennzeichnet, daß** der Heizdraht (2) wendelförmig um die Kunststoffschicht (1) herumgewickelt ist.

3. Flüssigkeitsleitung nach Anspruch 1 oder 2, **dadurch gekennzeichnet, daß** der Heizdraht (2) in Form einer Doppelwendel um die Kunststoffschicht (1) herumgewickelt ist und einen elektrisch isolierenden Überzug aufweist.

4. Flüssigkeitsleitung nach einem der Ansprüche 1 bis 3, **dadurch gekennzeichnet, daß** der Heizdraht (2) eine Schlaufe bildet.

5. Flüssigkeitsleitung nach Anspruch 3 oder 4, **dadurch gekennzeichnet, daß** die Enden des Heizdrahtes (2) mit einem Stecker (4) verbunden sind.

## Claims

1. Electrically heatable liquid line, wherein a heating wire (2) is directly arranged on an inner plastic layer (1) and an electrically insulating tape (3) is helically wound directly around the plastic layer (1) and the heating wire (2), **characterised in that** the insulating tape (3) is an adhesive tape comprising a textile strip which is on one side thereof coated with an adhesive glued to the plastic layer (1).

2. Liquid line according to claim 1, **characterised in that** the heating wire (2) is helically wound around the plastic layer (1).

3. Liquid line according to claim 1 or 2, **characterised in that** the heating wire (2) is wound in the form of a double helix around the plastic layer (1) and comprises an electrically insulating cover.

4. Liquid line according to any of the claims 1 to 3, **characterised in that** the heating wire (2) forms a loop.

5. Liquid line according to claim 3 or 4, **characterised in that** the ends of the heating wire (2) are connected to a plug (4).

## Revendications

1. Conduit de transport fluide à chauffage électrique, dans lequel est disposé directement sur une couche interne de matière synthétique (1) un fil de chauffage (2), et, directement autour de la couche de matière synthétique (1) et du fil de chauffage (2) est enroulée une bande isolante électriquement (3) en forme de spire, **caractérisé en ce que** la bande isolante (3) est une bande adhésive qui présente sur un côté une bande textile revêtue de matière adhésive dont la matière adhésive est collée avec la couche de matière synthétique (1).

2. Conduit de transport fluide selon la revendication 1, **caractérisé en ce que** le fil de chauffage (2) est enroulé en spire autour de la couche de matière synthétique (1).

3. Conduit de transport fluide selon la revendication 1 ou 2, **caractérisé en ce que** le fil de chauffage (2) est enroulé sous forme d'une double spire autour de la couche de matière synthétique (1) et présente un revêtement isolant électriquement.

4. Conduit de transport fluide selon l'une des revendications 1 à 3, **caractérisé en ce que** le fil de chauffage (2) forme une boucle.

5. Conduit de transport fluide selon la revendication 3 ou 4, **caractérisé en ce que** les extrémités du fil de chauffage (2) sont raccordées à une fiche (4).
